# EUROPEAN PATENT APPLICATION

(11) **EP 1 672 917 A1**
(43) Date of publication of application: **21.06.2006**
(21) Application number: 04788133.9
(22) Date of filing: 16.09.2004
(51) Int. Cl.: H04N 5/262

(54) **VIDEO SIGNAL PROCESSING APPARATUS**

(30) Priority: 01.10.2003 JP 2003342992
(71) Applicant: MATSUSHITA ELECTRIC INDUSTRIAL CO., LTD., Kadoma-shi, Osaka 571-8501 (JP)
(72) Inventor: URO, Katsuji, Osaka 572-0021 (JP); FUJIWARA, Mikio, Osaka 573-0064 (JP)
(74) Representative: TER MEER - STEINMEISTER & PARTNER GbR
(86) International application number: PCT/JP2004/013975
(87) International publication number: WO 2005/034510

(57) **Abstract**

A gain controller gain controls digitalized video signals for each minimum video unit. A variation controller establishes video blocks each consisting of a plurality of minimum video units, and also establishes a gain control value of the gain controller for each of the minimum video units constituting the established video blocks. The gain controller sequentially divides the video signals into the video blocks and gain controls, based on the gain control values, the respective minimum video units constituting each of the divided digital video blocks. In this way, there can be obtained a visual effect equivalent to a conversion of video signals such as 24P video signals to video signals such as 601 video signals by use of a conversion format such as 2:3 pull down method. Moreover, such visual effect can be realized without necessity of any frame memories and without implementing any complex timing controls.

## Description

### FIELD OF THE INVENTION

The present invention relates to a video signal processing device for executing an image conversion to a digitalized video signal.

### DESCRIPTION OF THE RELATED ART

There is available a video format conversion in which a projected image taken in a film, such as a movie, and a video signal produced in a CCD device for taking an image based on number of frames (24 frames per second) equal to that of the projected image taken in the film can be displayed on an NTSC TV receiver or recorded in a recording device such as VCR (Video Cassette Recorder) . Well-known examples of the video format conversion are the 2:3 pull-down method and the 2:3:3:2 pull-down method. As a known conventional example of the video format conversion of the pull-down method recited in No. 2003-284007 of the Publication of the Unexamined Japanese Patent Applications, the format conversion is executed in synchronous systems on input and output sides independent from each other so as to improve a visibility of the projected image after the format conversion.

As a result of applying the foregoing video format conversion, a progressive video signal comprising 24 frames per second (hereinafter, referred to as 24P video signal) can be accurately converted into an interlace video signal (hereinafter, referred to as 60I video signal) comprising 60 fields per second in the NTSC TV receiver, VCR and the like. Thereby, even the 60I video signal is able to achieve visual effects that are generally obtained in the movie film (24P video signal).

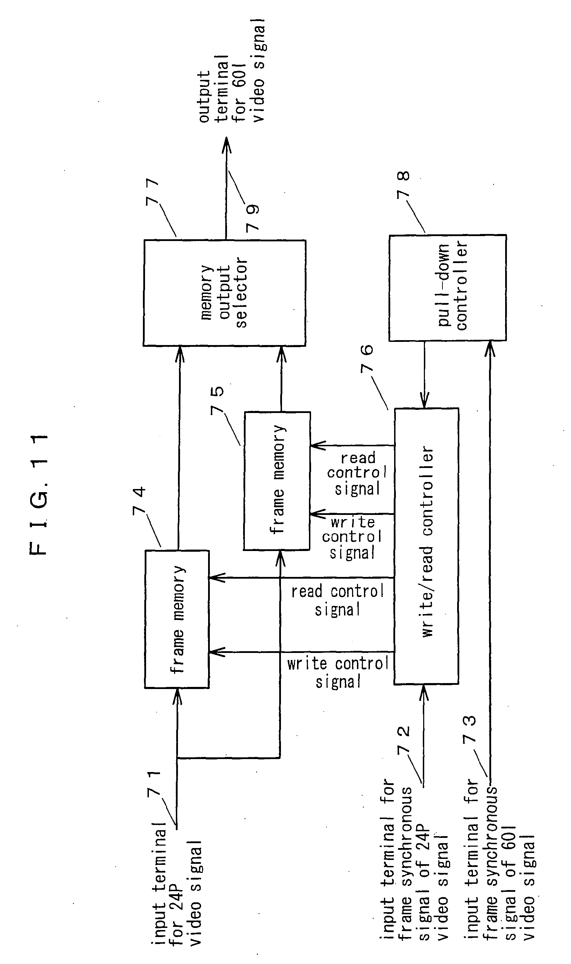

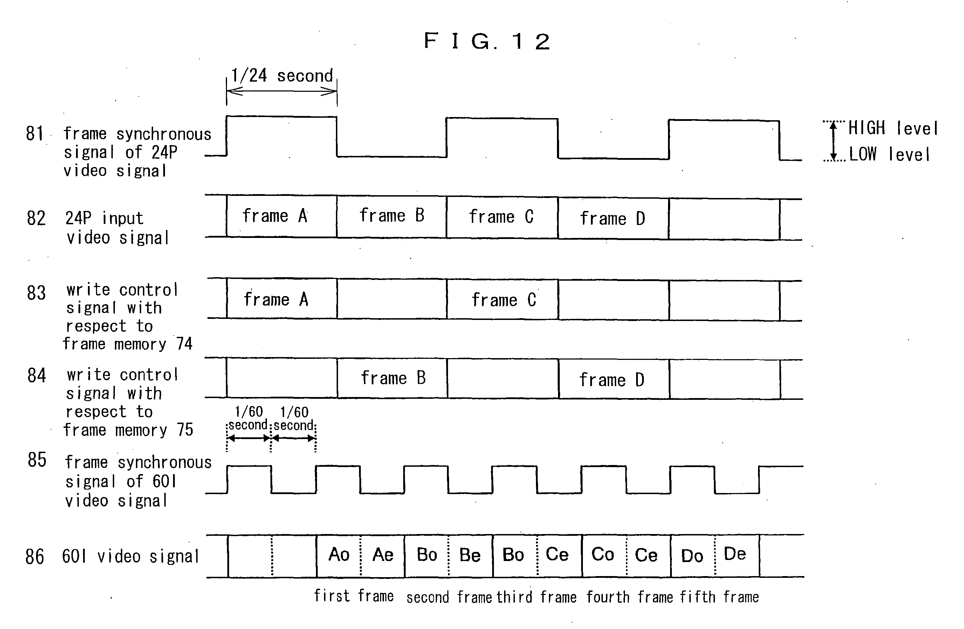

An example of the image conversion of the 2:3:3:2 pull-down method is described referring to Figs. 11 and 12.

Fig. 11 is a block diagram illustrating a constitution of a video signal processing device for converting the 24P video signal into the 60I video signal. Referring to reference numerals shown in Fig. 11, 71 denotes an input terminal for the 24P video signal, 72 denotes an input terminal for a frame synchronous signal of the 24P video signal, 73 denotes an input terminal for a frame synchronous signal of the 60I video signal, 74 and 75 denote frame memories, 76 denotes a write/read controller for the frame memories, 77 denotes a memory output selector, 78 denotes a pull-down controller, and 79 denotes an output terminal for the 60I video signal.

Fig. 12 is a timing chart in the case of executing the 2:3:3:2 pull-down conversion in the device constitution shown in Fig. 11. Referring to reference numerals shown in Fig. 12, 81 shows a timing of the frame synchronous signal of the 24P video signal, 82 shows a timing of the 24P video signal, 83 shows a write control timing with respect to the frame memory 74, 84 shows a write control timing with respect to the frame memory 75, 85 shows a timing of the frame synchronous signal of the 60I video signal, 86 shows a timing of the 60I video signal, and 86 shows a timing of the 60I video signal.

First, the 24p video signal inputted to the input terminal 71 is written in the respective frame memories 74 and 75. In the writing process, the write/read controller 76 switches from one of the memories to the other (frame memories 74 and 75) per frame of the 24P video signal in accordance with the frame synchronous signal of the 24P video signal inputted to the input terminal 72. The pull-down controller 78 executes a read control with respect to the frame memories 74 and 75 using the write/read controller 76 based on the frame synchronous signal of the 60I video signal inputted to the input terminal 73. The pull-down controller 78 outputs the video signals read from the frame memories 74 and 75 through selection of the signals in the memory selector 77. The video signal converted into the 60I video signal is outputted from the memory selector 77 via the output terminal 79.

Below is given a more detailed description. In a 24P input video signal 82 shown in Fig. 12, four frames continuous to one another timewise are serially provided with symbols A, B, C and D. Below is described a case of converting the four frames into the 60I video signal while synchronizing time axes thereof.

First, the 24P input video signal 82 is written in the frame memories 74 and 75 based on the frame synchronous signal 81. In other words, the write control signal 83 of the frame memory 74 and the write control signal 84 of the frame memory 75 are generatedbase don the frame synchronous signal 81. Then, the 24P input video signal 82 is written in the frame memory 74 based on the write control signal 83 when the frame synchronous signal 81 of the 24P video signal is HIGH. In contrast, the 24P input video signal 82 is written in the frame memory 75 based on the write control signal 84 when the frame synchronous signal 81 of the 24P video signal is LOW.

Next, the video signals stored in the frame memories 74 and 75 are serially read out as follows so that the 60I video signal 86 is generated. More specifically, in a first frame of the 60I video signal 86, a frame A of the 24P input video signal 82 is divided into a field Ao consisting of odd-numbered lines and a field Ae consisting of even-numbered lines, and the fields Ao and Ae as the dividing result are read as the first frame of the 60I video signal 86.

In the same manner, in a second frame of the 60I video signal 86, a frame B of the 24P input video signal 82 is divided into a field Bo consisting of odd-numbered lines and a field Be consisting of even-numbered lines, and the fields Bo and Be as the dividing result are read as the second frame of the 60I video signal 86.

In a third frame of the 60I video signal 86, the frame B of the 24P input video signal 82 is divided into the field Bo consisting of odd-numbered lines and the field Be consisting of even-numbered lines, and a frame C of the 24P input video signal 82 is divided into a field Co consisting of odd-numbered lines and a field Ce consisting of even-numbered lines. Then, the divided field Bo and the field Ce constitute a frame, which is read as the third frame of the 60I video signal 86.

In a fourth frame of the 60I video signal 86, the frame C of the 24P input video signal 82 is divided into the field Co consisting of odd-numbered lines and the field Ce consisting of even-numbered lines, and the fields Co and Ce as the dividing result are read as the fourth frame of the 60I video signal 86.

In a fifth frame of the 60I video signal 86, a frame D of the 24P input video signal 82 is divided into a field D0 consisting of odd-numbered lines and a field De consisting of even-numbered lines, and the fields Do and De as the dividing result are read as the fifth frame of the 60I video signal 86.

The respective frames of the 24P video signal are thus divided into the fields and read. Then, the fields of the frames are serially read in a partially overlapping manner based on such a repeated cycle as the two fields (Ao:Ae) → three fields (Bo:Be:Bo) → three fields (Ce:Co:Ce) → two fields (Do:De) → ... (hereinafter, referred to as 2:3:3:2 cycle), so that the 24P video signal is converted into the 60I video signal.

In the device constitution shown in Fig. 11, the continuous four frame A - D of the 24P video signal are serially arranged in the state where the predetermined fields (Bo and Ce in the foregoing example) are partially overlapped, so that the 24P video signal is converted into the 60I video signal. Because the cycle in which the fields of the respective frames are arranged in the conversion process is 2 (no overlapping in A frame) :3 (Bo overlapped in B frame) :3 (Ce overlapped in C frame) :2 (no overlapping in D frame), such a conversion method is called the 2:3:3:2 pull-down method.

The respective frames of the 24P video signal may be serially read based on such a repeated cycle as two fields → three fields → two fields → three fields → ... (hereinafter, referred to as 2:3 cycle) in the 60I video signal and thereby converted into the 60I video signal. Such a conversion method is called the 2:3 pull-down method.

The conventional constitution involves the following problems. The 24P video signal is a video format generally used in movie films. The 60I video signal is an example of a standard video format in television broadcasts. Therefore, when the 24P video signal is converted into the 60I video signal by means of the conversion format of the 2:3 pull-down method or the like, visual effects that are obtained in the movie films can be obtained in the same manner in the standard image display in the television broadcasts.

Recently, there is a strong demand that visual effects equal to those that are generally obtained in the movie films be realized in a video system or the like handled by an amateur video producer. In order to realize the foregoing visual effects in the in the generally employed format such as the 60I video signal, the 24P video signal is indispensable as an image source to be inputted. However, the 24P video signal cannot be obtained without video data taken and recorded in the film per se, or an image pickup device capable of taking the 24P video signal.

In the format conversion, such as the 2:3:3:2 pull-down method, which is executed in order to convert the 24P video signal into the 60I video signal, two frame memories are required as the indispensable components in such a conversion device. Further, the write/read control with respect to the frame memories, particularly the read control becomes complicated, and it becomes necessary to control the timing (frame synchronization) in the conversion of the 24P video signal into the 60I video signal. Thus, the formation conversion involves such unfavorable aspects as an increased circuit size, cost increase and more complicated controls.

Therefore, a main object of the present invention is to provide a video signal processing device capable of displaying a projected image achieving such visual effects that are obtained in the film in the NTSC receiver and VCR without any visual problem by means of a simplified circuit constitution and control method in the absence of the projected image taken in the film and the video signal generated by the image pickup device for picking up the image based on the number of the frames equal to that of the projected image taken in the film.

### DISCLOSURE OF THE INVENTION

A video signal processing device according to the present invention comprises a gain controller for gain-controlling a digitalized video signal per minimum video unit thereof and a variation controller for setting video blocks each comprising a plurality of minimum video units and setting a gain control value of the gain controller in each of the minimum video units constituting the set video blocks.

The gain controller serially divides the video signals into the video blocks, and gain-controls the respective minimum video units constituting the respective video blocks resulting from the division based on the gain control values.

According to the present invention, the video signals are serially divided into the respective video blocks, and the minimum video units constituting the respective video blocks resulting from the division are gain-controlled based on the gain control value, so that visual effects equal to those obtained in an input source can be realized in the video signal in a pseudo manner. Thereby, the present invention can generate the video signal capable of displaying the same visual effects as obtained in the film or the like in the pseudo manner in an NTSC receiver and VCR without any visual problem. Further, the present invention can attain such an effect in a simplified circuit configuration and control method.

### BRIEF DESCRIPTION OF THE DRAWINGS

Fig. 1 is a block diagram illustrating a constitution of a video signal processing device according to an embodiment 1 of the present invention.
Fig. 2 is a first operation timing chart of the video signal processing device according to the embodiment 1.
Fig. 3 is a second operation timing chart of the video signal processing device according to the embodiment 1.
Fig. 4 is a third operation timing chart of the video signal processing device according to the embodiment 1.
Fig. 5 is a block diagram illustrating a constitution of a video signal processing device according to an embodiment 2 of the present invention.
Fig. 6 is a first operation timing chart of the video signal processing device according to the embodiment 2.
Fig. 7 is a second operation timing chart of the video signal processing device according to the embodiment 2.
Fig. 8 is a block diagram illustrating a constitution of a video signal processing device according to an embodiment 3 of the present invention.
Fig. 9 is an operation timing chart of the video signal processing device according to the embodiment 3.
Fig. 10 is an operation timing chart according to a modified embodiment of the present invention and its reference example.
Fig. 11 is a block diagram illustrating a constitution of a video signal processing device according to a conventional technology.
Fig. 12 is an operation timing chart of the video signal processing device according to the conventional technology.

### DETAILED DESCRIPTION OF PREFERRED EMBODIMENTS

Hereinafter, preferred embodiments of the present invention are described in detail referring to the drawings.

Prior to the description of the preferred embodiments is described visual effects of a 24P video signal. In a 60I video signal, which is an exemplary standard video format in televisionbroadcasts , moving images each divided into 30 frames per second are continuously displayed in such a manner that each frame is further divided into two fields. Since a large number of moving images are continuously displayed, a viewer can hardly visually recognize flickers on the displayed image due to his/her capacity for visual perception.

In the case of the 24P video signal, moving images divided into 24 frames per second, which are less than 30 frames, are continuously displayed in such a manner that each frame is directly displayed as frame without the division into the frames. Therefore, when the 24P video signal is displayed, the viewer more easily visually recognizes the flickers on the displayed image than in the case of the 60I video signal. A cycle in which the visually recognized flickers are generated corresponds to a frame period (1/24 second) of the 24P video signal. Even if the 24P video signal is converted into the 60I video signal, such flickers are still visually recognized in the 60I video signal resulting from the conversion. Further, the cycle in which the visually recognized flickers are generated corresponds to 1/24 second in the same manner as the generation cycle of the flickers in the 24P video signal before conversion.

The visual effects obtained in the 24P video signal result from the flickers, and the visual effects are emphasized since the flickers are generated based on the same cycle as the frame period of the 24P video signal (1/24 second).

Based on the observation, the present invention intentionally generates the flickers in the 60I video signal based on the substantially same cycle as the frame rate of the 24P video signal in view of the foregoing observation. Thereby, the 60I video signal, which does not result from the conversion from the 24P video signal and therefore lacks the foregoing visual effects (flickers), is vested with the visual effects in a pseudo manner.

### EMBODIMENT 1

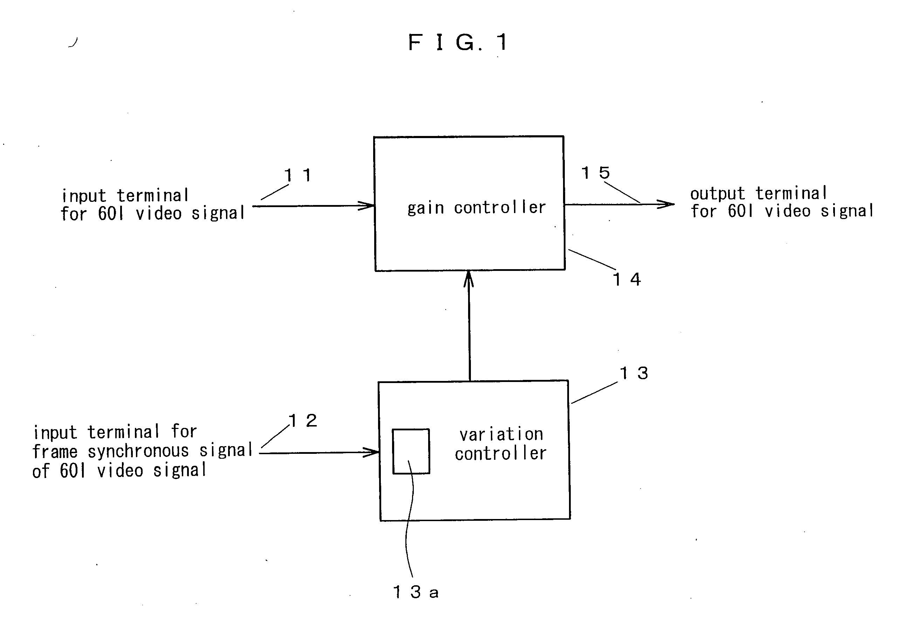

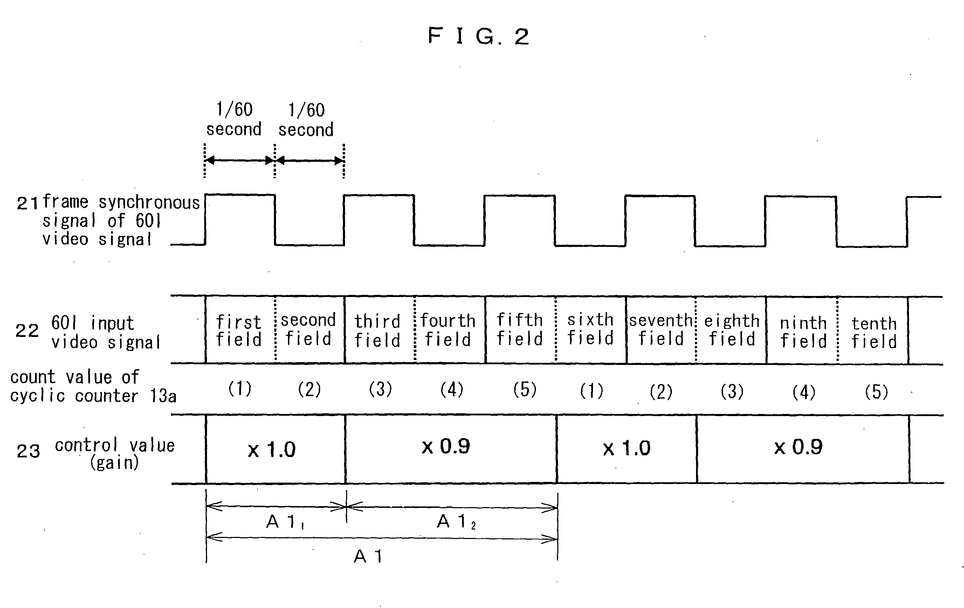

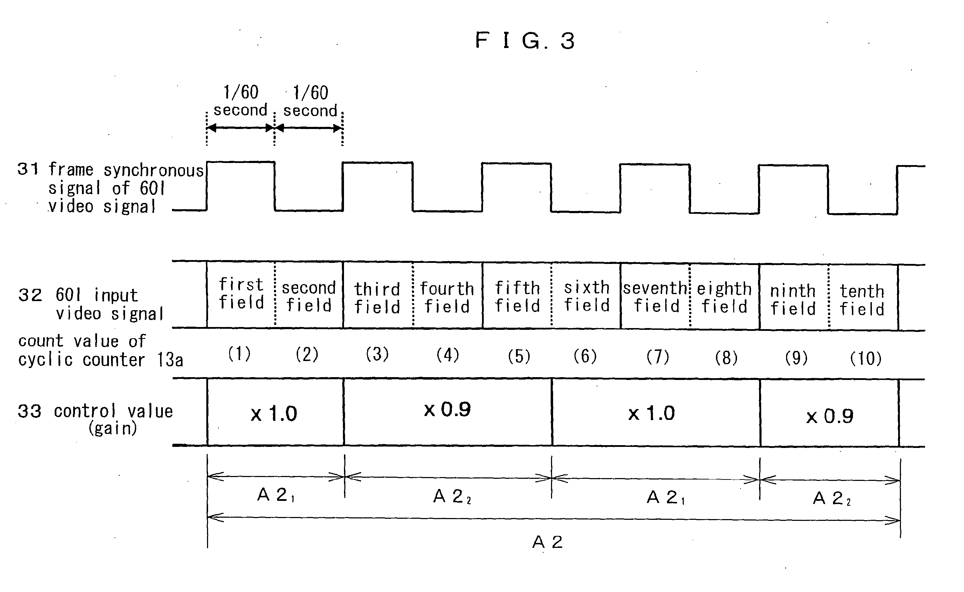

Fig. 1 is a block diagram illustrating a constitution of a video signal processing device according to an embodiment 1 of the present invention. Figs. 2 and 3 are respectively timing charts showing statuses of signal conversions corresponding to the 2:3 pull-down method and the 2:3:3:2 pull-down method.

Referring to reference numerals shown in Fig. 1, 11 denotes an input terminal for the 60I video signal, 12 denotes an input terminal for a frame synchronous signal of the 60I video signal, 13 denotes a variation controller, 14 denotes a gain controller, and 15 denotes an output terminal for the 60I video signal. Referring to reference numerals shown in Fig. 2, 21 shows a timing of the frame synchronous signal of the 60I video signal, 22 shows a timing of the 60I video signal, and 23 shows a timing for controlling a control value (gain). Referring to reference numerals shown in Fig. 3, 31 shows a timing of the frame synchronous signal of the 60I video signal, 32 shows a timing of the 60I video signal, and 33 shows a timing for controlling the control value. The 60I video signal is an interlace video signal whose frame period of 1/30 second and minimum video unit is a field.

In the video signal processing device, first, the digitalized 60I input video signal 22 is inputted from the input terminal 11 to the gain controller 14, and the frame synchronous signal 21 of the 60I video signal 22 is inputted from the input terminal 12 to the variation controller 13. The 60I input video signal 22 inputted to the input terminal 11 and the frame synchronous signal 21 inputted to the input terminal 12 synchronize with each other as shown in Figs. 2 and 3 and inputted based on an identical cycle. The frame synchronous signal 21 of the 60I input vide signal 22 is inverted per 60 Hz of the NTSC system.

The variation controller 13 sets a gain control value of the gain controller 14 based on the frame synchronous signal of the 60I video signal. More specifically, the variation controller 13 handles five fields (in the case of the 2:3 pull-down method) or ten fields (in the case of the 2:3:3:2 pull-down method), which are continuous in the inputted 60I input video signal 22, as one video block, and sets the gain control value so that the gain control value changes per field in each video block. In Figs. 2 and 3, respective fields constituting the 60I input vide signal 22 are serially designatedasafirstfield, a second field, ..., in a chronological order. The respective video blocks comprise (first field - fifth field), (sixth field - tenth field), ..., or (first field - tenth field). In the following description, the first video block (first - fifth field) or (first - tenth field) is described as initial video block of the respective video blocks.

First, a control operation in the case of generating in the pseudo manner the visual effects (flickers) generated in the image conversion according to the 2:3 pull-down method is described referring to Fig. 2. In the present case, video blocks A comprising five fields are set in the variation controller 13.

As shown in the control value (gain) 23 in Fig. 2, in the respective video blocks A1 (each comprising the five fields) constituting the 60I input video signal 22, first and second groups of fields are set as a minimum video unit group A1₁, and the gain control value of each field is set in the variation controller 13 so that the gain can be 1.0 times in comparison to a luminance signal of the input vide signal in the minimum video unit group A1₁. Further, third, fourth and fifth groups of fields in the respective video blocks A1 are set as another minimum video unit group A1₂, and the gain control value of each field is set in the variation controller 13 so that the gain can be 0.9 times in comparison to the luminance signal of the input vide signal in the minimum video unit group A1₂.

Because the gain control value is differently set in the minimum video unit groups A1₁ and A1₂, the variation controller 13 is constituted as follows. The variation controller 13 comprises a cyclic counter 13a for repeatedly counting the five fields of 1 - 5. The cyclic counter 13a repeatedly provides count values of (1) - (5) for the respective fields constituting the 60I input vide signal 22. The cyclic counter 13a counts up the values at every both edges (that are variation points) of the frame synchronous signal 21. The variation controller 13 recognizes the respective video blocks A1 based on the count values counted up by the counter 13a and determines the field positions in the respective video blocks A1. Further, the variation controller 13 judges if the relevant field is included in the minimum video unit group A1₁ or in the minimum video unit group A1₂ based on the determined field positions, and sets the gain control value based on a result of the determination.

The variation controller 13 sets the gain control value by repeating the foregoing control routine. Below is given a more detailed description.

A correspondence relation between the count value of the cyclic counter 13a and the gain adjustment amount of the gain controller 14 is previously set based on the setting of the minimum video unit groups A1₁ and A1₂. The variation controller 13 memorizes the correspondence relation between the set gain adjustment amount and count value (minimum video unit groups A1₁ and A1₂). In the case of adjusting the luminance in accordance with the 2:3 pull-down method, the correspondence relation memorized by the variation controller 13 is as follows. In the case of the minimum video unit groups A1₁ showing count values (1) and (2), the variation controller 13 sets the gain adjustment amount of 1.0 times. In the case of the minimum video unit groups A1₂ showing count values (3), (4) and (5), the variation controller 13 sets the gain adjustment amount of 0.9 times. The control routine is repeated so that the gain adjustment amounts are set.

The gain controller 14 actually controls the gain in accordance with the gain control value set by the variation controller 13. More specifically, the gain controller 14 multiplies the luminance signal of the 60I input video signal 22 inputted from the input terminal 11 for the 60I video signal by the set gain control value to thereby change the gain of the video signal. Thus, the gain of the luminance signal is controlled for every two fields and three fields (see Fig. 2) corresponding to the 2:3 pull-down cycle.

Next is described a control operation in the case of generating in the pseudo manner the visual effects (flickers) generated in the image conversion according to the 2:3:3:2 pull-down method referring to Fig. 3. In the present case, video blocks A2 comprising ten fields are set in the variation controller 13.

As shown in the control value (gain) 33 shown in Fig. 3, in the respective video blocks A2 (each comprising the five fields) constituting the 60I input video signal 32, first, second, sixth, seventh and eighth groups of fields are set as a minimum video unit group A2₁, and the gain control value of each field is set in the variation controller 13 so that the gain can be 1.0 times in comparison to the luminance signal of the input vide signal in the minimum video unit group A2₁. Further, third, fourth, fifth, ninth and tenth groups of fields in the respective video blocks A2 are set as another minimum video unit group A2₂, and the gain control value of each field is set in the variation controller 13 so that the gain can be 0.9 times in comparison to the luminance signal of the input vide signal in the minimum video unit group A2₂.

Because the gain control value is differently set in the minimum video unit groups A2₁ and A2₂, the variation controller 13 is constituted as follows. The variation controller comprises a cyclic counter 13a for repeatedly counting the ten fields of 1 - 10. The cyclic counter 13a repeatedly provides count values of (1) - (10) for the respective fields constituting the 60I input vide signal 22. The variation controller 13 recognizes the respective video blocks A2 based on the count values counted up by the cyclic counter 13a and determines the fieldpositions in the respective video blocks A2. The variation controller 13 judges if the relevant field is included in the minimum video unit group A2₁ or in the minimum video unit group A2₂ based on the determined field positions , and sets the gain control value based on a result of the determination.

The variation controller 13 sets the gain control value by repeating the foregoing control routine. Below is given a more detailed description.

A correspondence relation between the count value of the cyclic counter 13a and the gain adjustment amount of the gain controller 14 is previously set based on the setting of the minimum video unit groups A2₁ and A2₂. The variation controller 13 memorizes the correspondence relation between the set gain adjustment amount and count value (minimum video unit groups A2₁ and A2₂) . In the case of adjusting the luminance in accordance with the 2:3:3:2 pull-down method, the correspondence relation memorized by the variation controller 13 is as follows. In the case of the minimum video unit groups A2₁ showing count values (1), (2), (6), (7) and (8), the variation controller 13 sets the gain adjustment amount of 1.0 times. In the case of the minimum video unit groups A2₂ showing count values (3), (4), (5), (9) and (10), the variation controller 13 sets the gain adjustment amount of 0.9 times. The control routine is repeated so that the gain adjustment amounts are set.

The gain controller 14 actually controls the gain in accordance with the gain control value set by the variation controller 13. More specifically, the gain controller 14 multiplies the luminance signal of the 60I input video signal 32 inputted from the input terminal 11 for the 60I video signal by the set gain control value to thereby change the gain of the video signal. Thus, the gain of the luminance signal is controlled for every two fields, three fields, three fields and two fields (see Fig. 3) corresponding to the 2:3:3:2 pull-down cycle.

When one of the two luminance adjustments described above is executed, the gain of the luminance signal is changed 24 times per second. As a result, the flickers are generated as the visual effects in the 60I output video signal based on the cycle of 1/24 second. The video signal processing device according to the present invention generates the flickers in accordance with the 2:3 pull-down method or the cycle of the 2:3:3:2 pull-down method.

Thereby, even when the input video signal is 60I video signal, the output video signal thereof (60I video signal) can be easily provided with the described visual effects (flickers generated based on the cycle of 1/24 second). The visual effects mentioned here are, as described earlier, such visual effects that can be visually recognized by a viewer when the 24P video signal is displayed and still remain when the 24P video signal is converted into the 60I video signal.

The video signal processing device according to the present invention realizes the visual effects without providing a plurality of field memories and by executing such a relatively simple control operation as adjusting the gain in accordance with the counted number of the fields.

When the luminance (gain) is adjusted based on the cycles of the 2 :3 pull-down method and the 2:3:3:2 pull-down method, it is unavoidable for the variation points of the luminance (gain) to be located across the frames of the 60 video signal. For example, in the 2:3 pull-down cycle shown in Fig. 2, the variation points of the luminance (gain) are located between the fifth field and the sixth field and between the seventh field and the eighth field, which respectively constitute the same frames. In the 2:3:3:2 pull-down cycle shown in Fig. 3, the variation point of the luminance (gain) is located between the fifth field and the sixth field constituting the same frame in the same manner. The serial numbers of the fields are serially given to the 60I input video signals 22 and 32 in the chronological order in Figs. 2 and 3, and do not represent the order in which the fields are arranged in the minimum video unit group.

The fields result from the division of the frame. Therefore, the viewer may sense some visual problem when the luminance levels of the fields constituting the same frame are different.

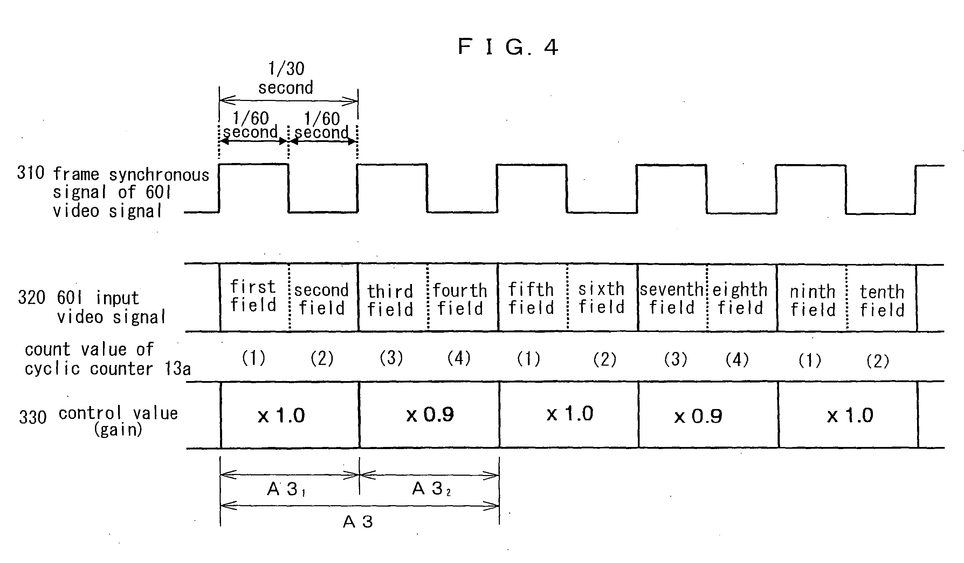

Below is described a control operation in order to eliminate the variation points of the luminance (gain) at such positions that may generate the visual problem. As shown in Fig. 4, the adjustment cycle of the luminance (gain) is set to 1/30 second synchronizing with the frame synchronous signal 310 of the 60I input video signal 320. Then, the luminance (gain) is adjusted based on the set adjustment cycle of 1/30 second. The cycle in which the luminance is changed thereby corresponds to a frame period of the 601 video signal. Therefore, the visual problem is eliminated since the positions of the variation points of the luminance (gain) correspond to the frame period (30 Hz) of the 60I video signal. In this case, video blocks A3 each comprises four fields, and a minimum video unit group A3₁ includes first and second fields in the video block A3, while another minimum video unit group A3₂ includes third and fourth fields in the video block A3.

In the case of executing the described gain control, the cycle in which the luminance (gain) is changed (cycle in which the flickers are generated) is 1/30 second, and such visual effects that can be obtained when the image of 30 frames per second is viewed, which are similar to those according to the present embodiment, can be obtained. However, the obtained cycle is slightly shorter than 1/24 second, which is the originally desired cycle in which the luminance (gain) is changed. Because a difference between the two cycles is relatively small despite the disadvantage, the foregoing control operation may be executed when it is the highestpriority to eliminate the variation points of the luminance at such positions that may generate the visual problem.

In the foregoing control operation, the cyclic counter 13a repeatedly provides the count values of (1) - (4) for the respective fields constituting the 60I input video signal 22. The variation controller 13 determines the fields to be controlled (minimum video unit groups A3₁ and A3₂) based on the count values counted up by the cyclic counter 13a, and sets the gain control values described above for the determined fields (minimum video unit groups A3₁ and A3₂). The variation controller 13 sets the gain control values by repeating the control routine. Below is given a more detailed description.

A correspondence relation between the count value of the cyclic counter 13a and the gain adjustment amount of the gain controller 14 is previously set based on the setting of the minimum video unit groups A3₁ and A3₂ . The variation controller 13 memorizes the correspondence relation between the set gain adjustment amount and count value (minimum video unit groups A3₁ and A3₂). In the case of adjusting the luminance in such a manner that the flickers are generated based on the cycle of 1/30 second, the correspondence relation memorized by the variation controller 13 is as follows. In the case of the minimum video unit groups A3₁ showing count values (1) and (2), the variation controller 13 sets the gain adjustment amount of 1.0 times. In the case of the minimum video unit groups A3₂ showing count values (3) and (4), the variation controller 13 sets the gain adjustment amount of 0.9 times. The control routine is repeated so that the gain adjustment amounts are set.

The gain controller 14 actually controls the gain in accordance with the gain control value set by the variation controller 13. More specifically, the gain controller 14 multiplies the luminance signal of the 60I input video signal 320 inputted from the input terminal 11 for the 60I video signal by the set gain control value to thereby change the gain of the video signal. Thus, the gain of the luminance signal is controlled for every two fields and two fields (see Fig. 4) corresponding to the cycle of 1/30 second.

### EMBODIMENT 2

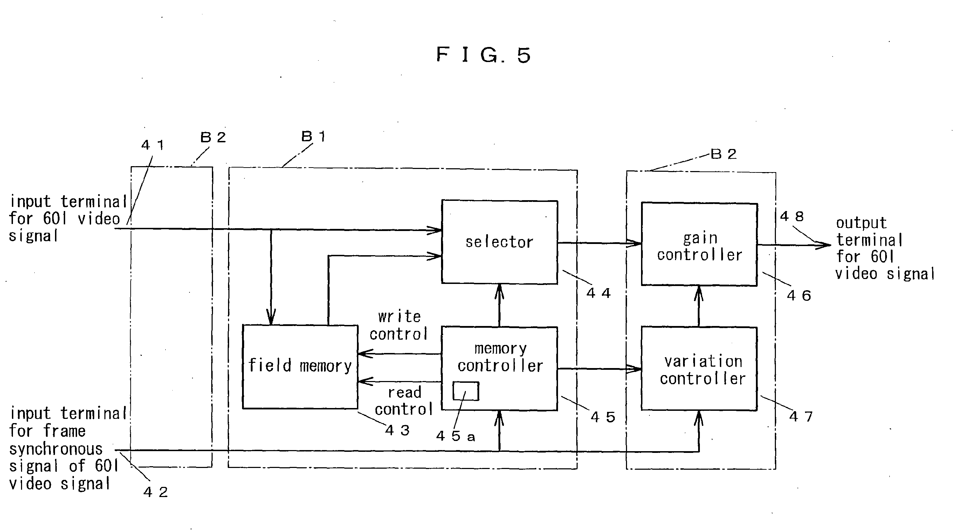

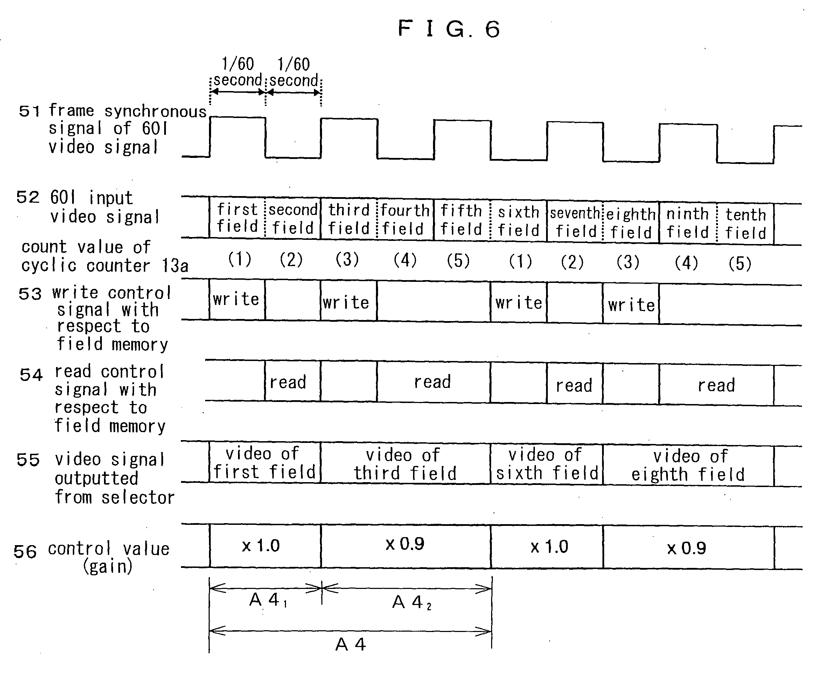

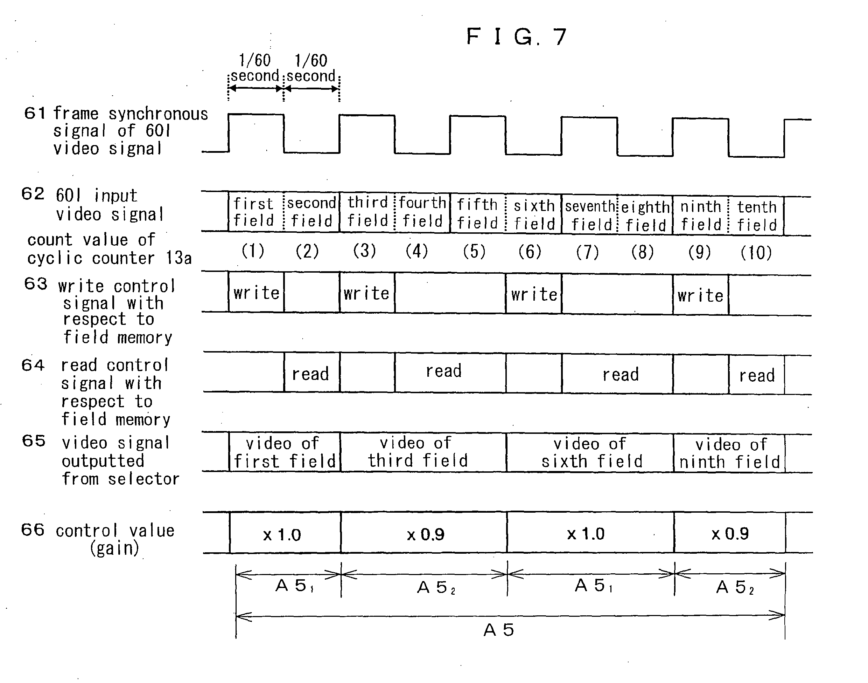

Fig. 5 is a block diagram illustrating a constitution of a video signal processing device according to an embodiment 2 of the present invention. Figs. 6 and 7 are respectively timing chart showing statuses of signal conversions corresponding to the 2:3 pull-down method and the 2:3:3:2 pull-down method.

Referring to reference numerals shown in Fig. 5 , 41 denotes an input terminal for the 60I video signal, 42 denotes an input terminal for a frame synchronous signal of the 60I video signal, 43 denotes a field memory, 44 denotes a selector, 45 denotes memory controller, 46 denotes a gain controller, 47 denotes a variation controller, and 48 denotes an output terminal for the 60I video signal.

Referring to reference numerals shown in Fig. 6, 51 shows a timing of the frame synchronous signal of the 60I video signal, 52 shows a timing of the 60I video signal, 53 shows a write control timing with respect to the field memory 43, 54 shows a read control timing with respect to the field memory 43, 55 shows a timing of a video output signal from the selector, and 56 shows a timing for controlling a control value.

Referring to reference numerals shown in Fig. 7, 61 shows a timing of the frame synchronous signal of the 60I video signal, 62 shows a timing of the 60I video signal, 63 shows a write control timing with respect to the field memory 43, 64 shows a read control timing with respect to the field memory 43, 65 shows a timing of the video output signal from the selector, and 66 shows a timing for controlling the control value.

Below is described a control operation by the video signal processing device. First, a control operation for vesting the video signal with the visual effects obtained in the conversion method according to the 2:3 pull-down method in the pseudo manner is described referring to Fig. 6.

In the video signal processing device, the digitalized 60I input video signal 52 is inputted from the input terminal 41 to the field memory 43 and the selector 44, and the frame synchronous signal 51 of the 60I input video signal 52 is inputted from the input terminal 42. The 60I input video signal 52 inputted to the input terminal 41 and the frame synchronous signal 51 inputted to the input terminal 42 synchronize with each other as shown in Fig. 6, and further inputted based on an identical cycle. The frame synchronous signal 51 of the 60I input video signal 52 is inverted per 60 Hz of the NTSC system.

The frame synchronous signal 51 of the 60I input video signal 52 is inputted to the memory controller 45 and the variation controller 47. The memory controller 45 and the variation controller 47 execute their control operations based on the frame synchronous signal.

The selector 44 alternatively selects the 60I input video signal 52 inputted via the input terminal 41 or the output read from the field memory 43 and outputs the selection result. The memory controller 45 controls the write and the read with respect to the field memory 43. The memory controller 45 controls the selecting operation of the selector 44.

The memory controller 45 more specifically controls the selecting operation as follows. The memory controller 45 comprises a cyclic counter 45a for repeatedly counting five fields of 1 - 5. The cyclic counter 45a repeatedly provides the count values of 1 - 5 for respective fields constituting the 60I input video signal 52 inputted to the input terminal 41 for the 60I video signal.

The count values of the cyclic counter 45a showing the fields to be written in the field memory 43 are previously set, and the memory controller 45 memorizes the set count values to be written. In the case of attaining the visual effects according to the 2:3 pull-down method in the pseudo manner, the count values to be written are (1) and (3).

The memory controller 45 outputs an instruction for writing the 60I input video signal 52 to the field memory 43 at such a timing that the count value of the 60I input video signal 52 supplied by the cyclic counter 45a is a count value showing the field to be written. The instruction for writing the 60I input video signal 52 is supplied to the field memory 43 as the write control signal 53 with respect to the field memory shown in Fig. 6.

The count values of the cyclic counter 45a showing timings of the read operation with respect to the field memory 43 are previously set, and the memory controller 45 memorizes the set count values showing the timings of the read operation. In the case of imparting the visual effects according to the 2:3 pull-down method in the pseudo manner, the count values showing the timings of the read-operation are (2), (4) and (5).

The memory controller 45 outputs an instruction for the read operation to the field memory 43 at such a timing that the count value supplied by the cyclic counter 45a is a count value showing the timing of the read operation. The instruction for the read operation is supplied to the field memory 43 as the read control signal 54 with respect to the field memory shown in Fig. 6.

In the case of imparting the visual effects according to the 2:3 pull-down method in the pseudo manner, the memory controller 45 instructs the write of the 60I input video signal 52 in the field memory 43 at, for example, at such timings that the count value of the cyclic counter 45a shows (1) and (3). At such timings that the count value of the cyclic counter 45a shows (2), (4) and (5), the memory controller 45 instructs the read operation with respect to the field memory 43.

The selection of the output by the selector 44 is controlled by the count value of the cyclic counter 45a. A linkage between the count value of the cyclic counter 45a and the output selection of the selector 44 is previously set, and the memory controller 45 memorizes the set linkage.

The 60I input video signal 52 and the output read from the field memory 43 are inputted to the selector 44. The memory controller 45 controls the selector 44 based on the field count value of the 60I input video signal 52 supplied by the cyclic counter 45a. More specifically, the memory controller 45 controls the selector 44 so that the 60I input video signal 52 and the output read from the field memory 43 are selectively outputted.

In the case of imparting the visual effects according to the 2:3 pull-down method in the pseudo manner, the linkage memorized by the selector 44 is as follows. The selector 44 selects the 60I input video signal 52 inputted to the input terminal 41 for the 60I video signal when the count values are (1) and (3), while selecting the output read from the field memory 43 when the count values are (2), (4) and (5).

Therefore, at such timings that the write operation is being executed to the field memory 43 (at such timings that the count value of the cyclic counter 45a shows (1) and (3)), the selector 44 selects the 60I input video signal 52 from the input terminal 41 and outputs it. At such timings by which the read operation is being executed to the field memory 43 (at such timings that the count value of the cyclic counter 45a shows (2), (4) and (5)), the selector 44 selects the output read from the field memory 43 and outputs it. Thereby, the selector 44 repeatedly outputs the 60I video signal already written in the field memory 43 until the write of the next video signal is executed as shown in the video signal 55 outputted from the selector in Fig. 6.

The variation controller 47 sets the gain control value with respect to the gain controller 46 based on the frame synchronous signal 51 of the 60I input video signal 52 inputted to the input terminal 42. At the time, the variation controller 47 changes the gain control value per field, and sets the gain control value so that the gain control value is changed when the video signal outputted from the selector 44 is different to the video signal of the field immediately before. Below is given a more detailed description.

In the case of imparting the visual effects (flickers) generated in the image conversion according to the 2:3 pull-down method in the pseudo manner, the variation controller 47 sets video blocks A4 each comprising five fields.

As shown in the control value (gain) 56 in Fig. 6, in the respective video blocks (each comprising the five fields) A4 constituting the 60I input video signal 52, first and second groups of fields are set as a minimum video unit group A4₁, and the gain control value of each field is set in the variation controller 47 so that the gain can be 1.0 times in comparison to the luminance signal of the input vide signal in the minimum video unit group A4₁. Further, third, fourth and fifth groups of fields in the respective video blocks A4 are set as another minimum video unit group A4₂, and the gain control value of each field is set in the variation controller 47 so that the gain can be 0.9 times in comparison to the luminance signal of the input vide signal in the minimum video unit group A4₂.

The variation controller 47 recognizes the respective video blocks A4 based on the count values counted up by the cyclic counter 45a, and determines the field positions in the respective video blocks A4. Further, the variation controller 47 determines if the relevant field is included in the minimum video unit group A4₁ or in the minimum video unit group A4₂ based on the determined field positions, and sets the gain control value based on a result of the determination.

The variation controller 47 sets the gain control value by repeating the foregoing control routine. Below is given a more detailed description.

A correspondence relation between the count value of the cyclic counter 45a and the gain adjustment amount of the gain controller 46 is previously set based on the setting of the minimum video unit groups A4₁ and A4₂. The variation controller 47 memorizes the correspondence relation between the set gain adjustment amount and count value (minimum video unit groups A4₁ and A4₂). In the case of adjusting the luminance in accordance with the 2:3 pull-down method, the correspondence relation memorized by the variation controller 47 is as follows . In the case of the minimum video unit groups A4₁ showing count values (1) and (2), the variation controller 47 sets the gain adjustment amount of 1.0 times. In the case of the minimum video unit groups A4₂ showing count values (3), (4) and (5), the variation controller 47 sets the gain adjustment amount of 0.9 times. The foregoing control routine is repeated so that the gain adjustment amounts are set.

The gain controller 46 actually controls the gain in accordance with the gain control value set by the variation controller 47. More specifically, the gain controller 46 multiplies the luminance signal of the 60I input video signal 22 outputted from the selector 44 by the set gain control value to thereby change the gain of the video signal. Thus, the gain of the luminance signal is controlled for every two fields and three fields corresponding to the 2:3 pull-down cycle.

Next is described a control operation in the case of generating in the pseudo manner the visual effects (flickers) generated in the image conversion according to the 2:3:3:2 pull-down method referring to Fig. 7.

The control operation in the present case is basically the same as in the case of generating in the pseudo manner the visual effects generated in the image conversion according to the 2:3 pull-down method, and the description of any part and control that are the same is omitted.

The cyclic counter 45a of the memory controller 45 repeatedly counts ten fields of 1 - 10. The cyclic counter 45a repeatedly provides count values of 1 - 10 for the respective fields constituting the 60I input vide signal 62 inputted to the input terminal 41 for the 60I video signal.

The count values of the cyclic counter 45a showing the fields to be written in the field memory 43 are previously set, and the memory controller 45 memorizes the set count values to be written. In the case of attaining the visual effects according to the control value (gain) 2:3:3:2 pull-down method in the pseudo manner, the count values to be written are (1), (3), (6) and (9).

The memory controller 45 outputs the instruction for writing the 60I input video signal 52 to the field memory 43 at such a timing that the count value of the 60I input video signal 52 supplied by the cyclic counter 45a is the count value showing the field to be written. The instruction for writing the 60I input video signal 52 is supplied to the field memory 43 as the write control signal 63 with respect to the field memory shown in Fig. 6.

The count values of the cyclic counter 45a showing timings of the read operation with respect to the field memory 43 are previously set, and the memory controller 45 memorizes the set count values showing the timings of the read operation. In the case of imparting the visual effects according to the 2:3:3:2 pull-down method in the pseudo manner, the count values showing the timings of the read-operation are (2), (4), (5), (7), (8) and (10).

The memory controller 45 outputs the instruction for the read operation to the field memory 43 at such a timing that the count value supplied by the cyclic counter 45a is the count value showing the timing of the read operation. The instruction for the read operation is supplied to the field memory 43 as the read control signal 64 with respect to the field memory shown in Fig. 7.

In the case of imparting the visual effects according to the 2:3:3:2 pull-down method in the pseudo manner, for example, at such timings that the count value of the cyclic counter 45a shows (1), (3), (6) and (9), the memory controller 45 instructs the write of the 60I input video signal 62 with respect to the field memory 43. At such timings that the count value of the cyclic counter 45a shows (2), (4), (5), (7), (8) and (10), the memory controller 45 instructs the read operation with respect to the field memory 43.

The output selection by the selector 44 is controlled by the count value of the cyclic counter 45a. A linkage between the count value of the cyclic counter 45a and the output selection of the selector 44 is previously set, and the memory controller 45 memorizes the set linkage.

The 60I input video signal 52 and the output read from the field memory 43 are inputted to the selector 44. The memory controller 45 controls the selector 44 based on the field count value of the 60I input video signal 52 supplied by the cyclic counter 45a. More specifically, the memory controller 45 controls the selector 44 so that the 60I input video signal 52 and the output read from the field memory 43 are selectively outputted.

In the case of imparting the visual effects according to the 2:3:3:2 pull-down method in the pseudo manner, the linkage memorized by the selector 44 is as follows. The selector 44 selects the 60I input video signal 62 inputted to the input terminal 41 for the 60I video signal when the count values are (1), (3), (6) and (9), while selecting the output read from the field memory 43 when the count values are (2), (4), (5), (7), (8) and (10).

Therefore, at such timings that the write operation is being executed to the field memory 43 (at such timings that the count value of the cyclic counter 45a shows (1), (3), (6) and (9)), the selector 44 selects the 60I input video signal 62 from the input terminal 41 and outputs it. At such timings that the read operation is being executed to the field memory 43 (at such timings that the count value of the cyclic counter 45a shows (2), (4), (5), (7), (8) and (10)), the selector 44 selects the output from the field memory 43 and outputs it. Thereby, the selector 44 repeatedly outputs the 60I video signal already written in the field memory 43 until the write of the next video signal is executed as shown in the video signal 65 outputted from the selector in Fig. 7.

The variation controller 47 sets the gain control value with respect to the gain controller 46 based on the frame synchronous signal of the 60I input video signal 52 inputted to the input terminal 42. At the time, the variation controller 47 changes the gain control value per field, and sets the gain control value so that the gain control value is changed when the video signal outputted from the selector 44 is different to the video signal of the field immediately before. Below is given a more detailed description.

In the case of imparting the visual effects (flickers) generated in the image conversion according to the 2:3:3:2 pull-down method in the pseudo manner, the variation controller 47 sets video blocks A5 each comprising five fields.

As shown in the control value (gain) 66 in Fig. 7, in the respective video blocks A5 (each comprising the ten fields) constituting the 60I input video signal 62, first, second, sixth, seventh and eighth groups of fields are set as a minimum video unit group A5₁, and the gain control value of each field is set in the variation controller 47 so that the gain can be 1.0 times in comparison to the luminance signal of the input vide signal in the minimum video unit group A5₁. Further, third, fourth, fifth, ninth and tenth groups of fields in the respective video blocks A5 are set as another minimum video unit group A5₂, and the gain control value of each field is set in the variation controller 47 so that the gain can be 0.9 times in comparison to the luminance signal of the input vide signal in the minimum video unit group A5₂.

The variation controller 47 recognizes the respective video blocks A5 based on the count values counted up by the counter 415a and determines the field positions in the respective video blocks A5. Further, the variation controller 47 judges if the relevant field is included in the minimum video unit group A5₁ or in the minimum video unit group A5₂ based on the determined field positions, and sets the gain control value based on a result of the determination.

The variation controller 47 sets the gain control value by repeating the foregoing control routine. Below is given a more detailed description.

A correspondence relation between the count value of the cyclic counter 45a and the gain adjustment amount of the gain controller 46 is previously set based on the setting of the minimum video unit groups A1₁ and A1₂. The variation controller 47 memorizes the correspondence relation between the set gain adjustment amount and count value (minimum video unit groups A5₁ and A5₂). In the case of adjusting the luminance in accordance with the 2:3:3:2 pull-down method, the correspondence relation memorized by the variation controller 47 is as follows. In the case of the minimum video unit groups A5₁ showing count values (1), (2), (6), (7) and (8), the variation controller 47 sets the gain adjustment amount of 1.0 times. In the case of the minimum video unit groups A5₂ showing count values (3), (4), (5), (9) and (10), the variation controller 47 sets the gain adjustment amount of 0.9 times. The control routine is repeated so that the gain adjustment amounts are set.

The gain controller 46 actually controls the gain in accordance with the gain control value set by the variation controller 47. More specifically, the gain controller 46 multiplies the luminance signal of the 60I input video signal 22 outputted from the selector 44 by the set gain control value to thereby change the gain of the video signal. Thus, the gain of the luminance signal is controlled for every two fields, three fields, three fields and two fields corresponding to the 2:3:3:2 pull-down cycle.

The renewal of the 60I video signal outputted for every two fields and three fields corresponding to the 2 :3 pull-down cycle or for every two fields, three fields, three fields and two fields corresponding to the 2:3:3:2 pull-down cycle and the flicker effect obtained by controlling the gain of the luminance signal are thus combined, so that such visual effects as obtained in photographing using the 24P video signal in a film or the like can be easily obtained in the inputted 60I video signal without the input of the 24P video signal.

The timing by which the memory controller 45 changes the output of the selector 44 and the timing by which the variation controller 47 changes the control value with respect to the gain controller 46 correspond to each other, and is controlled by the cyclic counter 45a. The cyclic counter 45amaybe provided in either of the memory controller 45 and the variation controller 47 as far as the memory controller 45 and the variation controller 47 can be controlled based on the timing generated by the cyclic counter 45a provided in one of them. Further, the cyclic counter may be provided in both of them as far as the timings generated by the two cyclic counters correspond to each other.

In the present embodiment, the luminance (gain) may be adjusted based on the cycle of 1/30 second in the same manner as described in the embodiment 1.

According to the description of the embodiment 2 , a device constitution comprising the gain controller 46 and the variation controller 47 (hereinafter, referred to as first constitution B1) is provided on a rear-stage side in a signal-transmission direction relative to a device constitution comprising the field memory 43, the selector 44 and the memory controller 45 (hereinafter, referred to as second constitution B2). However, as shown in Fig. 5, the second constitution B2 may be provided on a former-stage side in the signal-transmission direction relative to the first constitution B1.

### EMBODIMENT 3

In the described embodiments 1 and 2, the present invention was applied to the device constitution in which the visual effects generated in the 24P video signal and the video signal obtained by converting the 24P video signal into the 60I video signal (60I video signal) were generated in the 60I video signal in the pseudo manner. In an embodiment 3 of the present invention, the present invention is applied to a device constitution in which visual effects generated in the 24P video signal and a video signal obtained by converting the 24P video signal into a 50I video signal (50I video signal) are generated in the 50I video signal (PAL video signal) in the pseudo manner.

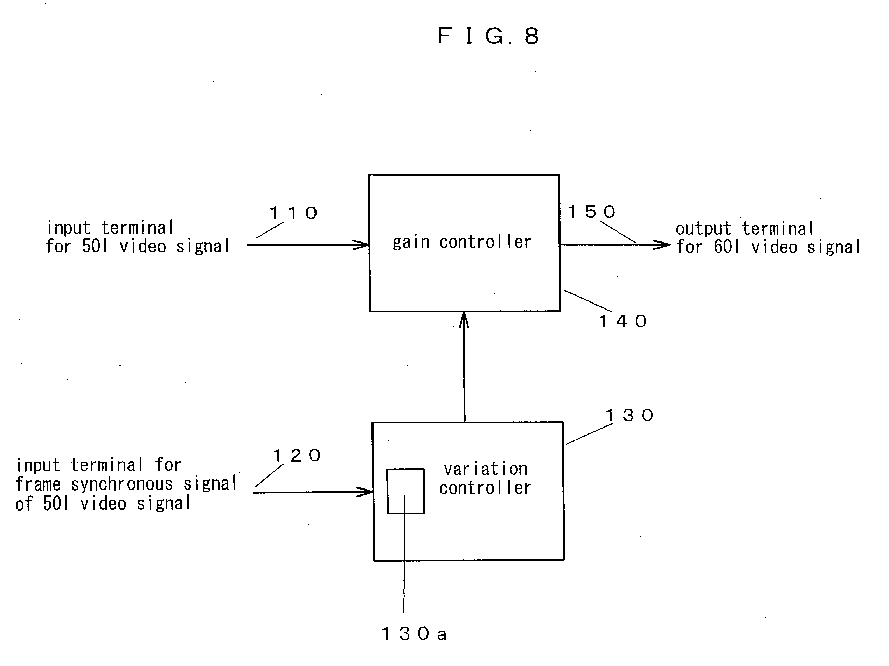

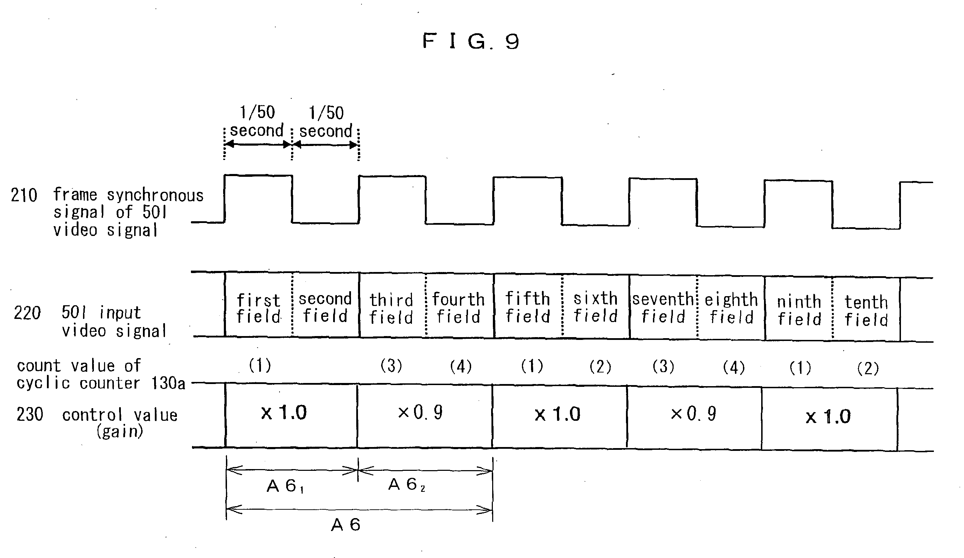

Fig. 8 shows a video signal processing device according to the present embodiment. Fig. 9 is a timing chart showing a status of an image conversion.

Referring to reference numerals shown in Fig. 8, 110 denotes an input terminal for the 50I video signal, 120 denotes an input terminal for a frame synchronous signal of the 50I video signal, 130 denotes a variation controller, 130a denotes a cyclic counter included in the variation controller 130, 140 denotes a gain controller, and 150 denotes an output terminal for the 60I video signal. Referring to reference numerals shown in Fig. 9, 210 shows a timing of the frame synchronous signal of the 50I video signal, 220 shows a timing of the 50I input video signal, and 230 shows a timing for controlling a control value (gain) . The 50I video signal is an interlace whose frame period is 1/25 second and minimum video unit is a field.

A signal processing executed by the video signal processing device is basically the same as that of the video signal processing device according to the embodiment 1. First, the digitalized 50I input video signal 220 is inputted from the input terminal 110 to the gain controller 140, and the frame synchronous signal 210 of the 50I input video signal 220 is inputted from the input terminal 120 to the variation controller 130. The 50I input video signal 220 inputted to the input terminal 110 and the frame synchronous signal 210 inputted to the input terminal 120 synchronize with each other as shown in Fig. 9 and inputted based on an identical cycle. The frame synchronous signal 210 of the 50I video signal 220 is inverted per 1/50 second of the PAL system.

The variation controller 130 sets a gain control value of the gain controller 140 based on the frame synchronous signal of the 50I video signal. More specifically, the variation controller 130 handles four fields, which are continuous in the inputted 60I input video signal 220, as one video block A6, and sets the gain control value so that the gain control value changes per field in each video block A6.

As shown in the control value (gain) 230 in Fig. 9, in the respective video blocks (each comprising the four fields) A6 constituting the 50I input video signal 220, first and second groups of fields are set as a minimum video unit group A6₁, and the gain control value of each field is set in the variation controller 13 so that the gain can be 1.0 times in comparison to a luminance signal of the input vide signal in the minimum video unit group A6₁. Further, third and fourth groups of fields in the respective video blocks A6 are set as a minimum video unit groups A6₂, and the gain control value of each field is set in the variation controller 130 so that the gain can be 0.9 times in comparison to the luminance signal of the input vide signal in the minimum video unit group A6₂.

Because the gain control value is differently set in the minimum video unit groups A6₁ and A6₂, the variation controller 13 is constituted as follows. The cyclic counter 130 comprises a cyclic counter 130a for repeatedly counting the four fields of 1 - 4. The cyclic counter 130a repeatedly provides count values of (1) - (4) for the respective fields constituting the 50I input vide signal 22. The variation controller 130 recognizes the respective video blocks A6 based on the count values counted up by the counter 130a and determines the field positions in the respective video blocks A6. Further, the variation controller 130 judges if the relevant field is included in the minimum video unit group A6₁ or in the minimum video unit group A6₂ based on the determined field positions, and sets the gain control value based on a result of the determination.

The variation controller 13 sets the gain control value by repeating the foregoing control routine. Below is given a more detailed description.

A correspondence relation between the count value of the cyclic counter 130a and the gain adjustment amount of the gain controller 14 is previously set, and the variation controller 130 memorizes the correspondence relation between the set gain adjustment amount and count value. The correspondence relation memorized by the variation controller 130 is as follows. In the case of the minimum video unit groups A6₁ showing count values (1) and (2), the variation controller 130 sets the gain adjustment amount of 1.0 times. In the case of the minimum video unit groups A6₂ showing count values (3) and (4), the variation controller 130 sets the gain adjustment amount of 0.9 times. The control routine is repeated so that the gain adjustment amounts are set.

The gain controller 140 actually controls the gain in accordance with the gain control value set by the variation controller 130. More specifically, the gain controller 140 multiplies the luminance signal of the 50I input video signal 220 inputted from the input terminal 110 for the 50I video signal by the set gain control value to thereby change the gain of the video signal. Thus, the gain of the luminance signal is controlled for every two fields and two fields (see Fig. 9).

Thereby, even when the input video signal is 50I video signal, the output video signal thereof (50I video signal) can be easily vested with the visual effects described earlier.

In the foregoing case, the cycle in which the luminance (gain) is changed (cycle in which the flickers are generated) is 1/25 second, which is slightly shorter than 1/24 second as the originally desired cycle in which the luminance (gain) is changed, though the projected image having the frame rate of 25 frames per second can be displayed in the state where the flickers are generated. However, because a difference between the cycles is relatively small, the control operation according to the present embodiment can achieve the visual effects corresponding to those obtained from the 24P video signal. Further, in the present embodiment, the luminance (gain) variation point completely corresponds to the frame variation point, which can avoid any visual problem.

In the described embodiments 1 - 3, the flickers are generated in such a manner that the gain is changed to be 1.0 times and 0.9 times. However, the gain control value is not necessarily changed based on the magnifications. When the difference between the two gain control values is approximately 5 - 15% or more desirably approximately 10%, the visual effects in the projected image obtained when the 24P video signal is displayed can be most efficiently achieved in the pseudo manner. Other examples of the gain control value capable of obtaining the same effect are 1.05 times, 0.9t times 1.1 times 1.0 times and the like.

In the described embodiments, the present invention was applied to the device for executing the signal processing to the 60I video signal and the 501 video signal. These video signals are the interlace video signals in which a minimum video unit is a field and frame periods are 1/30 second and 1/25 second. However, it is needless to say that the present invention can be applied to a progressive video signal whose minimum video unit is a frame (for example 30P video signal).

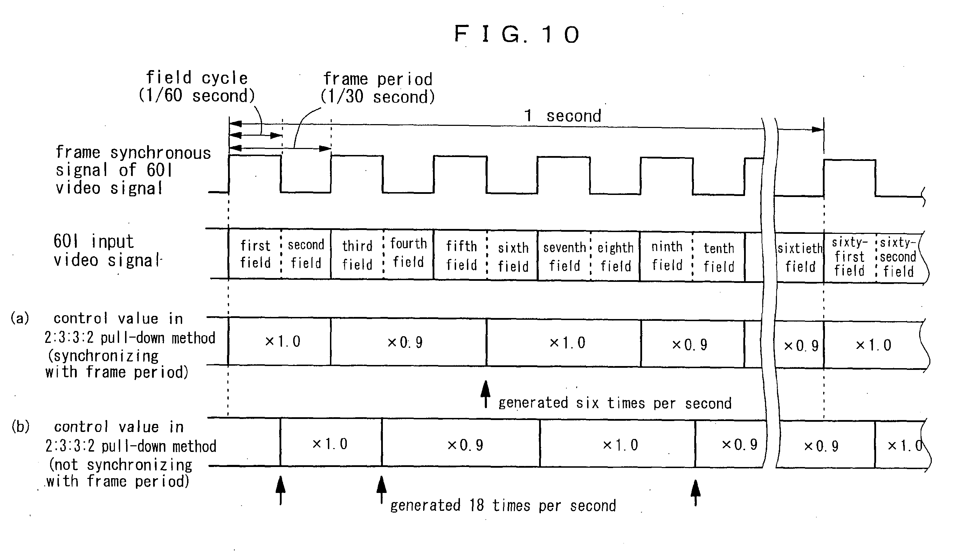

In the case of applying the present invention to the interlace video signal, the variation controller preferably synchronizes a bundle of video blocks each equivalent to a second to the frame period of the video signal. Below is described a reason for doing so referring to Fig. 10.

The 60I video signal and the 50I video signal to be controlled in the foregoing embodiments are the interlace signals. In the interlace signals, each frame as a component of the video signal is comprised of a pair of fields. In contrast to that, according to the present invention, the luminance is controlled per field as described.

In the case of applying the present invention to the interlace signal, the state where the variation point of the luminance signal synchronizes with the frames and located on the border of the frames and the state where the variation point of the luminance signal does not synchronize with the frame and located within the frame are generated. To be more specific about the location of the variation point of the luminance signal within the frame, the variation point of the luminance is located between the fields constituting the same frame. The location of the variation point within the frame leads to a luminance difference between the fields constituting the same frame, and a projected image thereby obtained gives the viewer the visual problem. Therefore, it is preferable that the location of the variation point of the luminance within the frame be avoided as often as possible.

However, in the case of applying the present invention to the interlace signal so that the visual effects in the projected image according to the pull-down methods can be generated in the pseudo manner, in particular, it is not possible to avoid the state where the variation point of the luminance is located within the frame. The possibility of such a location of the variation point of the luminance that causes the visual problem can be minimized in the following manner.

In the case of imparting the visual effects in the projected image according to the pull-down methods to the video signal in the pseudo manner according to the present invention, it can be assumed that the bundle of video blocks each equivalent to a second, which was mentioned earlier, are continuously arranged in the video signal. In the case of generating the visual effects in the projected image according to the 2:3:3:2 method in the 60I video signal in the pseudo manner, six of the video blocks A2 (10 fields) constitute the bundle of video signals each equivalent to a second, the bundle of video blocks A2 are continuously placed in the 60I video signal.

Fig. 10 shows a control state of the video signal in the case of applying the present invention to the 60I video signal so that the visual effects in the projected image according to the 2:3:3:2 pull-down method are generated in the pseudo manner. In the drawing, (a) denotes a state where the bundle of video blocks each equivalent to a second synchronize with the frame period in the case of generating the visual effects in the projected image according to the 2:3:3:2 pull-down method in the pseudo manner. (b) denotes a state where the bundle of video blocks each equivalent to a second does not synchronize with the frame period in the case of generating the visual effects in the projected image according to the 2:3:3:2 pull-down method in the pseudo manner.

As shown in Fig. 10, in the case of imparting the visual effects in the projected image according to the 2:3:3:2 pull-down method in the pseudo manner, and when the bundle of video blocks each equivalent to a second does not synchronize with the frame period, the state where the variation point of the luminance is located within the frame is generated 18 times per second. In contrast to that, when the bundle of video blocks each equivalent to a second synchronize with the frame cycle, the state where the variation point of the luminance is located within the frame is generated 6 times per second, which is reduced to 1/3.

As is clear from the foregoing description, in the case of applying the present invention to the 60I video signal so that the visual effects in the projected image according to the 2:3:3:2 pull-down method are generated in the pseudo manner, the state where the variation point of the luminance is located within the frame can be less frequently generated when the bundle of video blocks each equivalent to a second synchronize with the frame period.

The control operation shown in Fig. 10, which exerts such an effect, can be implemented, not only when the present invention is applied in the 2:3:3:2 pull-down method, but also when the present invention is applied to the 50I video signal described in the embodiment 3 referring to Fig. 9 and when the present invention is applied to the interlace video signal described in the modified embodiment of the embodiment 1 referring to Fig. 4. The same effect can be obtained in the foregoing cases.

### INDUSTRIAL APPLICABILITY

A video signal processing device according to the present invention exerts such an effect that a projected image, such as an image taken in a film, can be displayed and recorded in conventional receivers employing the NTSC system and the PAL system andVCR in a simplified circuit configuration and control method without inputting a 24P video signal, and is effective as a video signal processing device for executing an image conversion to a digitalized video signal.

## Claims

1. A video signal processing device comprising:
a gain controller for gain-controlling a digitalized video signal per minimum video unit thereof; and
a variation controller for setting video blocks each comprising a plurality of minimum video units and setting a gain control value of the gain controller in each of the minimum video units constituting the set video blocks, wherein
the gain controller serially divides the video signals into the video blocks and gain-controls the respective minimum video units constituting the respective video blocks resulting from the division based on the gain control values.

2. The video signal processing device as claimed in Claim 1, wherein
the variation controller sets a plurality of groups of minimum video units each comprising at least a minimum video unit in the respective video blocks and sets the gain control value in each of the groups of minimum video units.

3. The video signal processing device as claimed in Claim 2, wherein
the video signal is an interlace video signal whose frame period is 1/30 second and minimum video unit is a field, and
the variation controller sets the respective video blocks to include five fields, and the variation controller further sets one of the groups of minimum video units to include first and second fields of the video blocks and sets the other of the groups of minimum video units to include third, fourth and fifth fields of the video blocks.

4. The video signal processing device as claimed in Claim 2, wherein
the video signal is an interlace video signal whose frame period is 1/30 second and minimum video unit is a field, and
the variation controller sets the respective video blocks to include ten fields, and the variation controller further sets one of the groups of minimum video units to include first, second, sixth, seventh and eighth fields of the video blocks and sets the other of the groups of minimum video units to include third, fourth, fifth, ninth and tenth fields of the video blocks.

5. The video signal processing device as claimed in Claim 2, wherein
the video signal is an interlace video signal whose frame period is 1/30 second and minimum video unit is a field, and
the variation controller sets the respective video blocks to include four fields, and the variation controller further sets one of the groups of minimum video units to include first and second fields of the video blocks and sets the other of the groups of minimum video units to include third and fourth fields of the video blocks.

6. The video signal processing device as claimed in Claim 2, wherein
the video signal is an interlace video signal whose frame period is 1/25 second and minimum video unit is a field, and
the variation controller sets the respective video blocks to include four fields, and the variation controller further sets one of the groups of minimum video units to include first and second fields of the video blocks and sets the other of the groups of minimum video units to include third and fourth fields of the video blocks.

7. The video signal processing device as claimed in Claim 2, further comprising:
a memory for storing the digitalized video signal;
a selector for alternatively selecting one of the video signal and an output of the memory and outputting a result of the selection; and
a memory controller for controlling write of the video signal in the memory, read of the video signal from the memory and the output of the selector based on a frame synchronous signal of the video signal.

8. The video signal processing device as claimed in Claim 7, wherein
the gain controller gain-controls the output of the selector.

9. The video signal processing device as claimed in Claim 7, wherein
the gain controller gain-controls the video signal and supplies the gain-controlled video signal to the memory and the selector.

10. The video signal processing device as claimed in Claim 7, wherein
the video signal is an interlace video signal whose frame period is 1/30 second and minimum video unit is a field, and
the memory controller sets the respective video blocks to include five fields, and instructs the memory to write first and third fields therein and instructs the selector to selectively output the first and third fields at input timings of the first and third fields of the video blocks, and
the memory controller instructs the memory to read the data stored therein and instructs the selector to selectively output the read output of the memory at input timings of second, fourth and fifth fields of the video blocks.

11. The video signal processing device as claimed in Claim 7, wherein
the video signal is an interlace video signal whose frame period is 1/30 second and minimum video unit is a field, and
the memory controller sets the respective video blocks to include ten fields, and instructs the memory to write first, third, sixth and ninth fields therein and instructs the selector to selectively output the first, third, sixth and ninth fields at input timings of the first, third, sixth and ninth fields of the video blocks, and
the memory controller instructs the memory to read the data stored therein and instructs the selector to selectively output the read output of the memory at input timings of second, fourth, fifth, seventh, eighth and tenth fields of the video blocks.

12. The video signal processing device as claimed in Claims 4, 5 and 6, wherein
the variation controller synchronizes a bundle of video blocks each equivalent to a second with a frame period of the video signal.
